(19) Europäisches Patentamt

European Patent Office

Office européen des brevets

(11) Veröffentlichungsnummer: **0 248 154 B1**

(12) **EUROPÄISCHE PATENTSCHRIFT**

(45) Veröffentlichungstag der Patentschrift: **06.05.92**

(21) Anmeldenummer: **87103677.8**

(22) Anmeldetag: **13.03.87**

(51) Int. Cl.⁵: **C13K 5/00, A23C 21/00**

⸺

(54) **Verfahren zum Gewinnen von Milchzucker aus Molke.**

⸺

(30) Priorität: **13.03.86 DE 3608322**

(43) Veröffentlichungstag der Anmeldung:
**09.12.87 Patentblatt 87/50**

(45) Bekanntmachung des Hinweises auf die
Patenterteilung:
**06.05.92 Patentblatt 92/19**

(84) Benannte Vertragsstaaten:
**AT BE CH FR GB IT LI NL SE**

(56) Entgegenhaltungen:
**DE-A- 2 053 673**
**NL-A- 7 810 035**

**CHEMICAL ABSTRACTS, Band 101, Nr. 3, 16. Juli 1984, Seite 495, Zusammenfassung Nr. 22177u, Columbus, Ohio, US; V. PALO et al.: "Possibility of processing whey with bentonites", & POL'NOHOSPODARSTVO 1984, 30(3), 272-9**

(73) Patentinhaber: **Firma Fritz Guht**
**Bismarckstrasse 11**
**W-3280 Bad Pyrmont(DE)**

(72) Erfinder: **Guht, Fritz, Dr.**
**Bismarckstrasse 11**
**W-3280 Bad Pyrmont(DE)**

(74) Vertreter: **Tönnies, Jan G., Dipl.-Ing.**
**Niemannsweg 133**
**W-2300 Kiel 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zum Gewinnen von Milchzucker aus Molke nach dem Oberbegriff des Hauptanspruchs.

Aus der DE-AS 12 04 922 ist es bereits bekannt, aus Molke aus der in üblicher Weise, also durch Eindicken und Kristallisieren Milchzucker gewonnen werden kann, vor der Zuckergewinnung das Eiweiß durch Zusatz hochmolekularer Aluminiumsilicatverbindungen abzutrennen.

Das vorbekannte Verfahren, bei dem der Molke Montmorillonit zugegeben wird, ist zeitraubend und unwirtschaftlich.

Der Erfindung liegt damit die Aufgabe zugrunde, ein Verfahren zum Gewinnen von Milchzucker aus Molke zu schaffen, das weniger zeitraubend ist.

Erfindungsgemäß wird diese Aufgabe durch das kennzeichnende Teil des Anspruchs 1 angegebenen Merkmale gelöst. Die Unteransprüche geben vorteilhafte Ausgestaltungen des vorgeschhlagenen Verfahrens an.

Die vorgeschlagene Verwendung von Zeolith 4 A der genannten Formel hat die Wirkung der Bindung der Calciumionen der Molke. Die Molke wird so konzentriet, ohne daß es zu einer Ausfällung des Albumins und damit zu einer unerwünschten Steigerung der Viskosität kommt. Das Verbleiben von Zeolith-Calciumverbindungen in der Mutterlauge hat weiter den Vorteil, daß die Trocknung der Mutterlauge zur Gewinnung eines teilentzuckerten Molkepulvers vereinfacht wird. Die zur Erzielung eines rieselfähigen teilentzuckerten Molkepulvers aus der Mutterlauge jetzt erforderlichen Zugaben von Auflockerungsmitteln erübrigen sich.

Es wird weiter vorgeschlagen zur Gewinnung eines reinen aschearmen Milchzuckers die Calciumionen durch Zeolith 4 A auszufällen und die Zeolith-Calciumverbindung anschließend abzutrennen, beispielsweise durch Zentrifugierung. Die bekannte Anti-Redepositionswirkung (Schmutztragevermögen) der Zeolithe bietet einen zusätzlichen Vorteil hinsichtlich der Klärung der zu verarbeitenden Molke.

Beispiel 1:

1000 l Molke werden mit 1,5 kg Zeolith 4 A versetzt und sodann auf 60 % TS eingedickt, der Milchzucker wird auskristallisiert, die verbleibende Mutterlauge wird sodann zu einem rieselfähigen teilentzuckerten Molkepulver im Trockenturm verarbeitet.

Beispiel 2:

1000 l Molke werden mit 1,5 kg Zeolith 4 A versetzt, die ausfallende Zeolith-Calciumverbindung wird abzentrifugiert und die geklärte Molke in gewohnter Weise weiterverarbeitet.

Beispiel 3:

1000 l Molke werden mit 1,4 kg Zeolith 4 A und 100 g Natriumhexametaphosphat versetzt, sodann eingedickt und in gewohnter Weise weiterverarbeitet.

Beispiel 4:

1000 l Molke werden mit 1,4 kg Zeolith 4 A versetzt, die ausfallende Zeolith-Calciumverbindung abzentrifugiert, die geklärte Molke mit 70 g Natriumhexametaphosphat versetzt, dann eingedickt und in gewohnter Weise weiterverarbeitet.

**Patentansprüche**

1. Verfahren zum Gewinnen von Milchzucker aus Molke durch Eindicken der Molke und Kristallisieren des Milchzuckers, wobei der Molke vor dem Eindicken hochmolekulare Aluminiumsilicatverbindungen zugesetzt werden, dadurch gekennzeichnet, daß als Aluminiumsilicatverbindung Zeolith 4 A der Formel $(Na_2O)_x * Al_2O_3 * (SiO_2)_y$, wobei $x = 0,7 - 1,5$ und $y = 0,8 - 6$ ist, eingesetzt wird.

2. Verfahren nach Anspruch 1, dadurch gekennzeichnet, daß die mit Zeolith 4 A behandelte Molke vor dem Eindicken gefiltert und die wasserunlöslichen Calciumverbindungen abgetrennt werden.

3. Verfahren nach Anspruch 1 oder 2, dadurch gekennzeichnet, daß das Zeolith gemeinsam mit Orthophosphorsäure, polymeren Phosphorsäuren oder deren Salzen verwendet wird.

4. Verfahren nach einem der vorangehenden Ansprüche, dadurch gekennzeichnet, daß nach Ausfiltern der wasserunlöslichen Calciumverbindungen die Molke vor dem Eindicken mit Natriumhexametaphosphat versetzt wird.

**Claims**

1. Process for extracting lactose from whey by thickening the whey and crystallizing the lactose, high molecular weight aluminium silicate compounds being added to the whey prior to thickening, characterized in that zeolite 4 A of

formula $(Na_2O)_x$ • $Al_2O_3$ • $(SiO_2)_y$, in which x = 0.7 to 1.5 and y = 0.8 to 6 is used as the aluminium silicate compound.

2. Process according to claim 1, characterized in that, prior to thickening, the zeolite 4 A-treated whey is filtered and the water-insoluble calcium compounds separated.

3. Process according to claims 1 or 2, characterized in that the zeolite is used together with orthophosphoric acid, polymeric phosphoric acids or their salts.

4. Process according to one of the preceding claims, characterized in that after filtering off the water-insoluble calcium compounds, prior to thickening, the whey is mixed with sodium haxametaphosphate.

**Revendications**

1. Procédé d' extraction de la lactose de petit-lait par l' épaississement du petit-lait et par la cristallisation de la lactose, à l' occasion de quoi le petit-lait - avant l' épaississement - est combiné avec des composés de silicate d' aluminium macromoléculaires, caractérisé par le fait que la zéolite 4 A de la formule (Na2 0)x * Al2 03 * (Si 02)y est utilisée en tant que compsé de silicate d' aluminium et que x = 0,5 - 1,7 et y = 0,8 - 6.

2. Procédé d' après la revendication numéro 1, caractérisé par le fait que le petit-lait traité avec la zéolite 4 A est filtré avant l' épaississement et que les combinaisons de calcuim insolubles dans de l' eau en sont séparées.

3. Procédé d' après la revendication numéro 1 ou 2, caractérisé par le fait que la zéolite est utilisée ensemble avec de l' acide orthophosphorique , avec des acides phosphoriques polymères ou avec leurs sels.

4. Procédé d' après une des revendicatuons préalables, caractérisé par le fait qu' après la séparation des combinaisons de calcuim insolibles dans de l' eau , le petit-lait - avant l'épaississement - est mélangé avec de l' hexamétaphosphate de sodium.